# EUROPEAN PATENT SPECIFICATION

(11) **EP 4 447 659 B1**
(45) Date of publication and mention of the grant of the patent: **22.10.2025**
(21) Application number: 22862322.9
(22) Date of filing: 14.12.2022
(51) Int. Cl.: A01K 51/00

(54) **SUBLIMATION DEVICE FOR PROTECTING HONEY BEES AGAINST INSECTS**
SUBLIMATIONSVORRICHTUNG ZUM SCHUTZ VON HONIGBIENEN GEGEN INSEKTEN
DISPOSITIF DE SUBLIMATION POUR LA PROTECTION DES ABEILLES MELLIFÈRES CONTRE LES INSECTES

(30) Priority: 14.12.2021 HU 2100431
(43) Date of publication of application: 23.10.2024
(73) Proprietor: Fenyösy, János, 2091 Etyek (HU)
(72) Inventor: Fenyösy, János, 2091 Etyek (HU)
(74) Representative: Jámbor, Eszter
(86) International application number: PCT/HU2022/050089
(87) International publication number: WO 2023/111605

(56) References cited:
- CA-A1- 2 985 267
- KR-A- 20180 044 498
- US-B1- 10 757 921

## Description

### Technical field

The invention relates to an oxalic acid sublimation device that is adapted to be utilised in apiaries and comprises a pot, at least one heating means, and a vapour outlet tube. The sublimation device according to the invention is able to optimise the sublimation process and to drastically reduce the risk of oxalic acid condensation in the outlet tube. As a result, the oxalic acid sublimation device allows easier, quicker and more energy efficient operation and needs less maintenance.

### Background art

The Asian honey bee mite is one of the most widespread pests of honey bees. It is very important to control varroa mites (i.e., keep their number under a given threshold) because they degrade the health of bee colonies by spreading viral diseases, and their uncontrolled proliferation very often leads to the loss of the colony. One of the accepted mite control methods is oxalic acid sublimation or vaporisation (various terms are in use; in the English-language literature the term "vaporisation" is applied more frequently, while in Hungarian the method is widely called "sublimation", hereinafter the latter term is used) wherein crystalline oxalic acid (H₂C₂O₄·2H₂O) is sublimated at high temperature (usually 190-230 °C) in a sublimation device, and the generated vapour is introduced into the interior of the hive. When the hot oxalic acid vapour cools off and takes up external humidity, it condenses and forms a thin oxalic acid crystalline layer on the inside surfaces of the hive, thus providing the mite control effect. Oxalic acid dihydrate starts to sublimate at a temperature of 157 °C; if it is heated above a temperature of 235-240 °C it increasingly transforms into formic acid, which is harmful to bees.

Beekeepers apply suitably configured devices for performing the oxalic acid treatment described above. The prior art contains various technical solutions for sublimation; the present invention improves the solution wherein - except for an outlet tube - the heated pot is hermetically sealed in the course of the sublimation process, the oxalic acid dihydrate sublimating due to heating generating overpressure inside the pot, and the oxalic acid vapour being released from the pot and introduced into the beehive through the outlet tube of the pot.

A advice for applying oxalic acid treatment is known from US10757921B1.

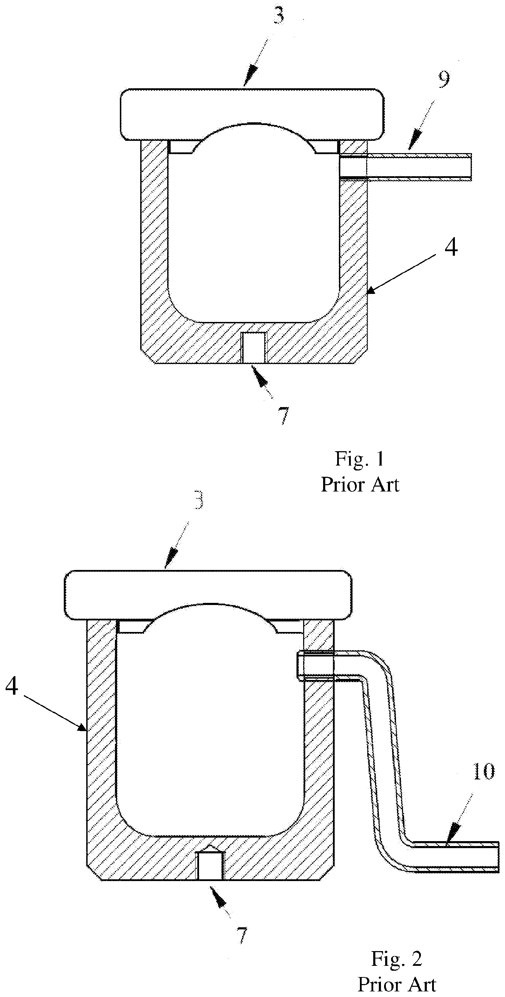

Prior art devices are described in relation to Figs. 1 and 2. The pot 4 of the devices is made of a metal with favourable heat conduction properties. The most frequently applied heating element is a tubular band heater (also called clamp heater) that is attached to the outside of the pot 4. A temperature sensor is disposed in a bore 7 disposed at the bottom of the cylindrical pot 4. The sensor is applied for controlling the band heater by switching it on and off and thus keeping the pot 4 at the desired temperature. The upper outlet tube 9 through which the oxalic acid vapour is released under pressure is disposed at the cylindrical side surface of the pot 4 near the lid of the pot 4. It is necessary to dispose the upper outlet tube 9 at the top portion of the pot 4 because otherwise (i.e., if the outlet tube was situated at the bottom) - because at first the crystal water contained in the oxalic acid dihydrate placed in the inside space of the pot 4 comes to boiling - the oxalic acid would leave the pot in a liquid state. However, because the upper outlet tube 9 starts from the upper portion of the pot 4, the oxalic acid can escape only as a vapour. Two types of arrangement have become widespread. In one of the arrangements, the oxalic acid is released through the upper outlet tube 9 (such a solution is applied in the Oxalika PRO device that is presented on the internet site http://www.talitha-info.com/?lang=hu ). In the case of another prior art solution, the oxalic acid leaves the device through a curved outlet tube 10 (such a solution is applied in the devices SzublimOx, Varroa-Ox, Provap, etc. that can be found at the internet site
http://www.citovar.hu/termekkategoria/szublimalas/szublimalashoz-kijuttato-eszkozok/

In this technical solution the curved outlet tube 10 extending from the top horizontally or at an angle is bent downwards and is again bent at 90 degrees at the point where it reaches the bottom of the pot 4, thereby allowing that the device can be applied for performing sublimation treatment also through the low-lying entrance to the hive (that is fitted with a landing board).

A similar solution is also disclosed in the patent document US 10,757,921 B1. This solution also applies band heating, with the oxalic acid vapour being discharged through an upper outlet tube protruding from the lid of the pot.

Another prior art technical solution is presented in the utility model description TW20190213843, wherein the cylindrical side surface is heated by a burner, with the vapour outlet tube being passed along the cylindrical surface and (from outside) under the pot and having a curved shape at the bottom.

The above-described devices applying the most widely applied technical solution may have the following malfunctions:
Applying band heaters is not optimal because when the oxalic acid is fed into the device it falls to the bottom of the pot 4 and removes heat therefrom. As a result of this, the temperature sensor detects the temperature drop and turns on the band heater. However, the heat supplied by the band heater arrives to the bottom of the pot 4 after a long delay (the control has a large time constant), and, as shown by practical experience, this leads to significant overheating or, in the case of PID temperature control, slow heat-up and large temperature fluctuations.

In the first solution, because the upper outlet tube 9 is attached to the relatively thin cylindrical wall of the pot 4, it cannot be heated sufficiently, i.e., its end tends to cool down to the critical temperature at which some of the oxalic acid vapour flowing through it undergoes condensation, which (sooner or later) blocks the tube. Removing the oxalic acid condensate is a time-consuming task. Unfavourable (cold and windy) weather further increases the frequency of blockages. The arrangement of the upper outlet tube 9 is not optimal, because in order to ensure that the oxalic acid is released exclusively in vapour state, the outlet pipe must be situated at the top portion of the pot 4, but the end of the outlet tube is preferably located at the bottom portion of the device such that it can access the exit of the beehive above the landing board. The result is the same in case - as with the second solution - the oxalic acid vapour is introduced into the hive through a curved outlet tube 10. The length of the curved outlet tube 10 run situated in the outside space, and also its curved shape increase the tendency of the curved outlet tube 10 to cool off, and thus its tendency to get blocked, while the curved shape makes cleaning the tube (which is time-consuming by itself) even more difficult and cumbersome. In addition to that, the bending, brazing and/or welding of the curved outlet tube 10 are labour-intensive and time-consuming operations.

Another drawback of the solution comprising a curved outlet tube 10 is that in order to achieve its required curved shape the tube is made of a soft metal, usually soft copper, which has a tendency to become even softer over time and break off during use.

The objective of the invention is to provide - by eliminating the drawbacks of prior art solutions - an improved outlet tube for releasing oxalic acid vapour and implement a *more optimal* heating system and a pot that has these improved features and can be serially produced.

The invention is based on the recognition that sublimation through the hive exit can be implemented in a more preferable manner in case the outlet tube is disposed near the bottom of the pot, and in case the outlet tube is as short as possible and has as simple configuration as possible, while being made of a material of sufficient strength. We have also recognised that the interior of the pot can be configured such that the boiling oxalic acid dihydrate is not able to flow out through the outlet tube disposed at the bottom, i.e., such that only the oxalic acid vapour is able to leave the device. According to our further recognition, providing as short an *outlet run* as possible and arranging it as close to the heating means as possible results in expedient temperature conditions, so the temperature required for preventing oxalic acid condensation can be ensured appropriately.

### Disclosure of the Invention

The technical solution according to the invention is therefore a sublimation device for protecting honey bees against arthropod pests, the device comprising a pot with a heated inside space a lid at least one heating means and with a vapour outlet tube. The invention is characterised in that the pot has a thickened bottom. Two intersecting blind holes are formed in the thickened bottom such that the axes thereof lie at an angle with respect to each other, where one of the holes opens either directly from the bottom of the pot or through the side wall of the pot to the heated inside space, and the other of the holes opens to the space outside the pot. A bottom outlet tube is disposed in the blind hole opening to the space outside the pot. Also, a vapour release tube is disposed in the blind hole opening directly from the bottom of the pot to the heated inside space. The end of the vapour release tube opening to the inside space is disposed under the lid spaced apart therefrom.

According to a preferred embodiment of the invention, the intersecting blind holes are perpendicular to each other.

According to another preferred embodiment of the invention, the vapour release tube is constituted by the blind hole opening through the side wall of the pot to the *heated inside space,* or a vapour release tube is disposed in said blind hole.

Another preferred embodiment of the invention is characterised in that the heating means is implemented as at least one, and preferably at least two heating cartridges that are preferably disposed beside the bottom outlet tube.

In a further preferred embodiment of the invention, the lid comprises an oxalic acid drop tube adapted for facilitating the feeding of oxalic acid into the device.

In another preferred embodiment of the invention, a hole adapted for receiving a temperature sensor is disposed under the heated inside space of the pot.

### Brief description of the drawings

In the following, the sublimation device according to the invention will be described in relation to exemplary embodiments referring to the accompanying drawings, where
Fig. 1 shows a sectional view of a currently commercially available prior art solution comprising a top-mounted straight outlet tube,
Fig. 2 shows a sectional view of a currently widely applied prior art solution comprising a curved outlet tube,
Fig. 3 shows the axonometric sectional view of the pot of the device according to the invention,
Fig. 4 shows a sectional view of the pot of the device according to the invention, and
Fig. 5 shows the bottom outlet of the pot of the device according to the invention and the location of the heating cartridges.

### Modes for carrying out the invention

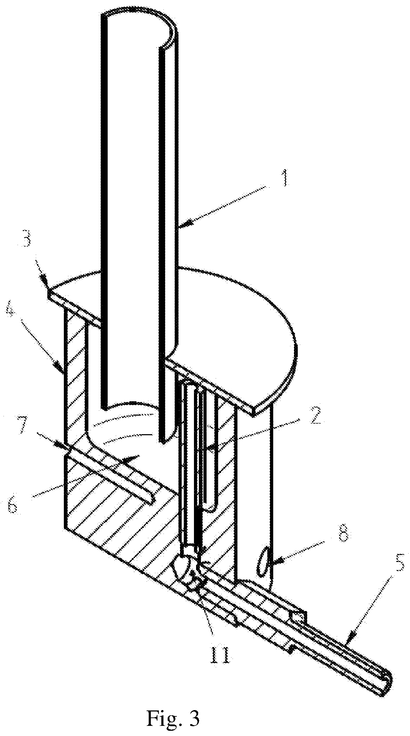

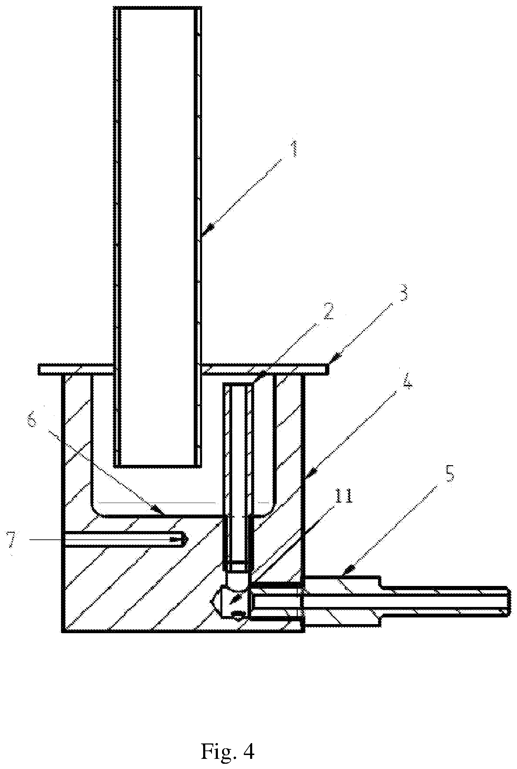

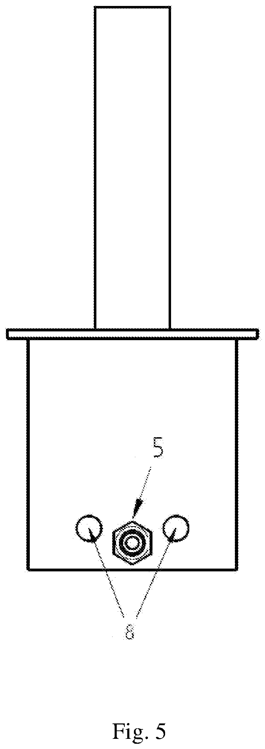

Figs. 1 and 2 show the configuration of a pot applied in a prior art device that was described above in the section on background art. As can be seen in Figs. 3 and 4, the pot **4** of the sublimation device according to the invention comprises a thickened bottom having a thickness of 7-50 mm; in the exemplary embodiment, preferably 30 mm, and includes a heated inside space **6.** Two intersecting blind holes **11** are formed in the thickened bottom of the pot **4** such that the axes of the blind holes **11** lie at an angle with respect to each other - expediently they are perpendicular to each other, where one of the holes opens - either directly or through the side wall of the pot **4** - to the heated inside space **6,** and the other of the holes opens to the space outside the pot **4.** A bottom outlet tube **5** is disposed in the (preferably horizontal) blind hole **11** opening to the space outside the pot **4.** The bottom outlet tube **5** is adapted for conveying the oxalic acid vapour to the hive entrance. In the exemplary embodiment, at least one, but preferably two heating cartridges **8** are disposed at each side of the bottom outlet tube **5** (see Fig. 5) such that the cartridges encompass the bottom outlet tube **5,** heating it at close range. The heating means can also be a band heater because by arranging the tubes according to the invention the required functionality can also be achieved applying band heating. Further, in the (preferably vertical) blind hole **11** opening directly to the heated inside space **6** there is arranged a vapour release tube **2.** In case the (expediently vertical) blind hole **11** is formed in the side wall of the pot **4,** it is possible to realise the invention such that the vapour release tube **2** is constituted by this blind hole **11.** The vapour release tube **2** and the bottom outlet tube **5** can be fixed in the blind holes **11** by pressing, by threaded connection, or any other manner that is obvious to a person skilled in the art. Due to the intersecting configuration of the blind holes **11,** the oxalic acid vapour under pressure can freely escape through them. The length of the vapour release tube **2** is chosen such that it does not contact the lid **3** attached to the pot **4,** i.e., it is spaced apart therefrom. In case the blind hole **11** opening to the inside space **6** is formed in the side wall of the pot **4,** the hole communicates with the inside space **6** through an opening disposed spaced apart from the lid **3** underneath it. This configuration ensures that the oxalic acid vapour **2** can enter the vapour release tube, and at the same time the liquid oxalic acid boiling in the crystal water due to the heating can be prevented from outflowing through the tube. Expediently, an oxalic acid drop tube **1** is disposed in the lid **3** for facilitating the feeding of oxalic acid into the device. After the oxalic acid has been fed into the device, the drop tube **1** is sealed such that the pot **4** can be pressurised, and the oxalic acid vapour can escape only through the bottom outlet tube **5.** Expediently, a hole **7** is disposed under the heated inside space **6** of the pot **4** near the heating means - in our example, the two heating cartridges **8** - switching them on and off on the basis of the measured temperature values.

The appliance according to the invention has the following advantages:
- The temperature drop caused by the oxalic acid dihydrate fed to the heated inside space **6** is detected by a temperature sensor situated directly under the heated inside space **6** resulting in the heating cartridges **8** being switched on. In such a manner, quick reaction-time (low time constant) temperature control can be achieved.
- Irrespective of the temperature of the outside space, the vapour release tube **2** is situated in the heated inside space **6,** and therefore it is not able to cool down and the oxalic acid will not condense in it.
- The bottom outlet tube **5** starts from the thickened bottom of the pot **4** and is situated directly between the two heating cartridges **8,** so it is less prone to cooling off, and thus the oxalic acid is not able to condense in it.
- The bottom outlet tube **5** is easily machinable, as it is configured to be separate from the release tube and is not curved/bent. It is therefore expediently made of such strong materials (e.g., copper, brass, etc.) that are also able to withstand the mechanical loads caused by the weight of the device during operation as it is adapted to support the entire weight of the device.
- The solution involving a bottom outlet tube **5** allows the sublimation treatment of bee colonies through the hive exit.
- The device according to the invention can be manufactured applying generic CNC machining technology, i.e., it does not require manual work, soldering or welding.
- In the case of higher-volume series manufacturing the configuration can be modified such that the separately machined vapour release tube **2** shown in the drawings can expediently also be manufactured by moulding, or even as a cavity formed in the wall of the pot **4.**

## Claims

1. Sublimation device for protecting honey bees against arthropod pests, the device comprising a pot with a heated inside space a lid at least one heating means and with a vapour outlet tube, **characterised in that** the pot (4) has a thickened bottom, with two intersecting blind holes (11) being formed in the thickened bottom such that the axes thereof lie at an angle with respect to each other, where one of the holes opens either directly from the bottom of the pot (4) or through the side wall of the pot (4) to the heated inside space (6), and the other of the holes opens to the space outside the pot (4), and with a bottom outlet tube (5) being disposed in the blind hole (11) opening to the space outside the pot (4) and a vapour release tube (2) being disposed in the blind hole (11) opening directly from the bottom of the pot to the heated inside space (6), where the end of the vapour release tube (2) opening to the inside space (6) is disposed under the lid (3) spaced apart therefrom.

2. The sublimation device according to Claim 1, **characterised in that** the intersecting blind holes (11) are perpendicular to each other.

3. The sublimation device according to Claim 1, **characterised in that** the vapour release tube (2) is constituted by the blind hole (11) opening through the side wall of the pot (4) to the heated inside space (6).

4. The sublimation device according to Claim 1, **characterised in that** a vapour release tube (2) is disposed in the blind hole (11) opening through the side wall of the pot (4) to the heated inside space (6).

5. The sublimation device according to Claim 1, **characterised in that** the heating means is implemented as at least one, and preferably at least two heating cartridges (8) that are preferably disposed beside the bottom outlet tube (5).

6. The sublimation device according to Claim 1, **characterised in that** the lid (3) includes an oxalic acid drop tube (1) adapted for facilitating the feeding of oxalic acid into the device.

7. The sublimation device according to Claim 1, **characterised in that** a hole (7) adapted for receiving a temperature sensor is disposed under the heated inside space (6) of the pot (4).

## Patentansprüche

1. Sublimationsvorrichtung zum Schützen von Honigbienen vor Arthropoden-Schädlingen, die Vorrichtung umfassend einen Topf mit einem erwärmten Innenraum, einen Deckel mit mindestens einem Heizmittel und mit einem Dampfauslassrohr, **dadurch gekennzeichnet, dass** der Topf (4) einen verdickten Boden aufweist, wobei zwei einander überschneidende Sacklöcher (11) in dem verdickten Boden ausgebildet sind, sodass deren Achsen in einem Winkel zueinander angeordnet sind, wobei eines der Löcher entweder direkt vom Boden des Topfs (4) aus oder durch die Seitenwand des Topfs (4) hindurch zu dem erwärmten Innenraum (6) hin geöffnet ist, und das andere der Löcher zum Raum außerhalb des Topfs (4) hin geöffnet ist, und wobei ein unteres Auslassrohr (5) in dem Sackloch (11) angeordnet ist, das zum Raum außerhalb des Topfs (4) hin geöffnet ist und ein Dampfablassrohr (2) in dem Sackloch (11) angeordnet ist, das direkt vom Boden des Topfs zum erwärmten Innenraum (6) geöffnet ist, wobei das Ende des Dampfablassrohrs (2), das zum Innenraum (6) hin geöffnet ist, unter dem Deckel (3) und davon beabstandet angeordnet ist.

2. Sublimationsvorrichtung nach Anspruch 1, **dadurch gekennzeichnet, dass** die einander überschneidenden Sacklöcher (11) senkrecht zueinander angeordnet sind.

3. Sublimationsvorrichtung nach Anspruch 1, **dadurch gekennzeichnet, dass** das Dampfablassrohr (2) aus der Öffnung des Sacklochs (11) durch die Seitenwand des Topfs (4) zum erwärmten Innenraum (6) hin besteht.

4. Sublimationsvorrichtung nach Anspruch 1, **dadurch gekennzeichnet, dass** ein Dampfablassrohr (2) in der Öffnung des Sacklochs (11) durch die Seitenwand des Topfs (4) zum erwärmten Innenraum (6) hin angeordnet ist.

5. Sublimationsvorrichtung nach Anspruch 1, **dadurch gekennzeichnet, dass** das Heizmittel mindestens als eine und vorzugsweise mindestens als zwei Heizpatronen (8) implementiert ist, die vorzugsweise neben dem unteren Auslassrohr angeordnet (5) sind.

6. Sublimationsvorrichtung nach Anspruch 1, **dadurch gekennzeichnet, dass** der Deckel (3) ein Oxalsäure-Tropfrohr (1) einschließt, angepasst zum Erleichtern des Zuführens von Oxalsäure in die Vorrichtung.

7. Sublimationsvorrichtung nach Anspruch 1, **dadurch gekennzeichnet, dass** ein Loch (7), angepasst zum Aufnehmen eines Temperatursensors, unter dem erwärmten Innenraum (6) des Topfs (4) angeordnet ist.

## Revendications

1. Dispositif de sublimation destiné à protéger des abeilles contre des arthropodes nuisibles, le dispositif comprenant un pot avec un espace intérieur chauffé, un couvercle, au moins un moyen de chauffage, et avec un tube de sortie de vapeur, **caractérisé en ce que** le pot (4) possède un fond épaissi, avec deux trous borgnes se croisant (11) formés dans le fond épaissi de telle sorte que leurs axes forment un angle entre eux, l'un des trous s'ouvrant directement depuis le fond du pot (4) ou à travers la paroi latérale du pot (4) sur l'espace intérieur chauffé (6), et l'autre des trous s'ouvrant sur l'espace à l'extérieur du pot (4), et avec un tube de sortie inférieur (5) disposé dans le trou borgne (11) s'ouvrant sur l'espace à l'extérieur du pot (4) et un tube de libération de vapeur (2) disposé dans le trou borgne (11) s'ouvrant directement depuis le fond du pot sur l'espace intérieur chauffé (6), l'extrémité du tube de libération de vapeur (2) s'ouvrant sur l'espace intérieur (6) étant disposée sous le couvercle (3) à l'écart de celui-ci.

2. Dispositif de sublimation selon la revendication 1, **caractérisé en ce que** les trous borgnes se croisant (11) sont perpendiculaires l'un à l'autre.

3. Dispositif de sublimation selon la revendication 1, **caractérisé en ce que** le tube de libération de vapeur (2) est constitué par le trou borgne (11) s'ouvrant à travers la paroi latérale du pot (4) sur l'espace intérieur chauffé (6).

4. Dispositif de sublimation selon la revendication 1, **caractérisé en ce qu'**un tube de libération de vapeur (2) est disposé dans le trou borgne (11) s'ouvrant à travers la paroi latérale du pot (4) sur l'espace intérieur chauffé (6).

5. Dispositif de sublimation selon la revendication 1, **caractérisé en ce que** le moyen de chauffage est mis en œuvre sous la forme d'au moins une, et de préférence au moins deux cartouches chauffantes (8) qui sont de préférence disposées près du tube de sortie inférieur (5).

6. Dispositif de sublimation selon la revendication 1, **caractérisé en ce que** le couvercle (3) comporte un tube de déversement d'acide oxalique (1) adapté pour faciliter l'introduction d'acide oxalique dans le dispositif.

7. Dispositif de sublimation selon la revendication 1, **caractérisé en ce qu'**un trou (7) adapté pour recevoir un capteur de température est disposé sous l'espace intérieur chauffé (6) du pot (4).
